# EUROPEAN PATENT SPECIFICATION

(11) **EP 3 089 830 B1**
(45) Date of publication and mention of the grant of the patent: **31.10.2018**
(21) Application number: 14877099.3
(22) Date of filing: 30.12.2014
(51) Int. Cl.: B09B 3/00, B01J 2/10, B01J 2/00, B01D 53/62, C05D 3/02

(54) **METHOD AND APPARATUS FOR GRANULATING FLY ASH**
VERFAHREN UND VORRICHTUNG ZUM GRANULIEREN VON FLUGASCHE
PROCÉDÉ ET APPAREIL DE GRANULATION DE CENDRES VOLANTES

(30) Priority: 31.12.2013 FI 20136342
(43) Date of publication of application: 09.11.2016
(73) Proprietor: Kuopanportti, Hannu, 90800 Oulu (FI)
(72) Inventor: Kuopanportti, Hannu, 90800 Oulu (FI)
(74) Representative: Kolster Oy Ab
(86) International application number: PCT/FI2014/051066
(87) International publication number: WO 2015/101715

(56) References cited:
- EP-A1- 1 815 903
- DE-A1-102006 002 290
- JP-A- H11 156 326
- JP-A- 2002 273 374
- JP-A- 2005 193 185
- JP-A- 2011 206 675
- US-A1- 2005 244 317

## Description

### Field of the invention

The invention relates to granulating fly ash.

Fly ash is produced annually in hundreds of millions of tons in the combustion processes of power plants worldwide. The amount of fly ash increases, because the use of bioenergy, such as wood and peat, increases continuously. In power plants, ash is normally separated by using a multiphase multi-chamber electric separator, with which it is brought to a receiving hopper.

Fly ash can be utilized in fertilizing forests and as filler and surface material for environmental construction, for example. The dusting of fly ash and the heavy metals contained therein pose a problem.

To reduce dusting, it is known to granulate the ash, whereby the fly ash is moistened with a liquid and the mixture is rotated in a large granulating drum or plate, in which the ash forms into small granules as the rotation movement continues and more and more ash matter attach to the surface layer. Additionally, one earlier method is disclosed in JPH11156326.

Today, the deficiencies of the known methods and apparatuses relate to the stability of the granules being formed and the energy efficiency of the methods and apparatuses.

### Brief description of the invention

It is thus an object of the invention to provide a method and an apparatus implementing the method in such a manner that the above-mentioned problems can be reduced. The object of the invention is achieved by a method that is characterised in that fly ash containing one or more alkali earth oxides is, in addition to being mixed, moistened with a moistening liquid at flue gas atmosphere, which results in calcium hydroxide being formed in the moistening liquid on surface of ash particles, and the calcium hydroxide of liquid bridges of the ash particle formed granules is reacted with carbon dioxide absorbed from flue gas to the moistening liquid, whereby solid calcium carbonate is formed that stabilizes ash granules produced by layered granulation, wherein in the method flue gas is fed against the material flow direction of the fly ash and ash granules.

Correspondingly, the apparatus according to the invention is characterised in that it comprises, as consecutive operating blocks in a processing unit, a moistening block having a moistening liquid input, a granulating block subsequent to the moistening block and a drying block subsequent to the granulating block, and that the processing unit comprises an input and output for flue gas, which are positioned relative to each other in such a manner that the flue gas can be directed to both the drying block and the subsequent granulating block.

Preferred embodiments of the invention are disclosed in the dependent claims.

The method and apparatus according to the invention provide the advantage that the formed granules are of good quality, the structure of the apparatus is compact, and energy efficiency is good.

### Brief description of the figures

The invention will now be described in more detail in connection with preferred embodiments and with reference to the accompanying drawings, in which:

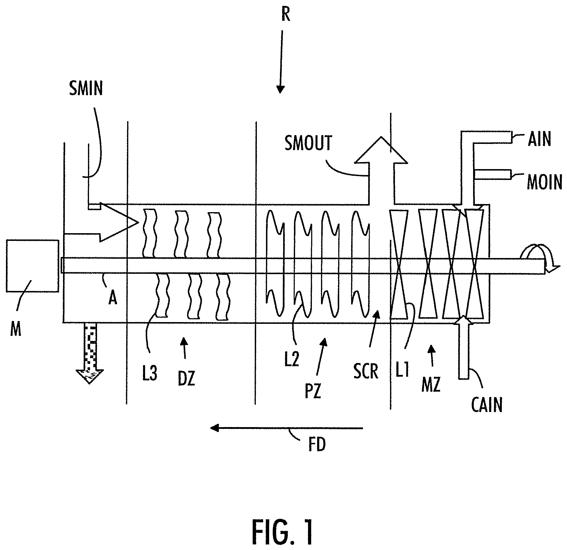

Figure 1 shows a granulating apparatus.

### Detailed description of the invention

The invention relates to an apparatus for granulating fly ash. The apparatus comprises, as consecutive operating blocks in a processing unit R, a moistening block MZ having a moistening fluid input MOIN, a granulating block PZ subsequent to the moistening block MZ, and a drying block DZ subsequent to the granulating block PZ. AIN indicates the input of fly ash.

The processing unit R comprises an input SMIN and output SMOUT for flue gas positioned relative to each other in such a manner that the flue gas can be directed to both the drying block DZ and the subsequent granulating block PZ.

The processing unit R has a conveyance device SCR, such as a screw, for mixing the fly ash and produced granules and conveying them in the flow direction of the processing unit. In the fly ash processing unit R, the conveyance device SCR comprises a pipe or cylinder C with blade structures, i.e. blades L1, L2, L3, suspended from an axle A rotatable by a motor M and arranged to mix the ash and convey it in the direction FD of the axle A, i.e. in the flow direction FD. A desired conveyance rate for the material flow can be produced with the selection or control of the blade angle.

On the side of the drying block, i.e. drying zone DZ, in particular, but already on the side of the end part of the granulating block PZ, i.e. granulating zone, the conveyed ash is already in the form of ash granules and not so much fine-grained ash.

For the granules to be produced, the conveyance device SCR with its blades is also arranged by the rotation movement it produces to lift the ash/granule preform upward until the ash/granule preform falls down under gravity and then again comes under the effect of the rotating lift by the conveyance device SCR; the granule preform collects more mass in each cycle. The moist material is mixed, whereby the flue gas and moist ash granules come into contact with each other and the granules collide with each other.

In an embodiment, the flue gas input SMIN and output are connected against the flow direction FD of the material in the consecutive granulating block PZ and drying block DZ. In the figure, the flow direction FD is from right to left and the flue gas is fed from left to right. Correspondingly, this can be presented in such a manner that the flue gas input SMIN and output SMOUT are connected in a counter-flowing manner to the flow direction of the material as defined by the conveyance device SCR so that the flue gas input SMIN is in the conveyance direction defined by the conveyance device SCR later than the flue gas output SMOUT.

One possible implementation of the processing unit R, such as pipe granulator R, in the granulating apparatus is to make the diameter of a pipe granulator R used in connection with a large biopower plant, for instance, to be at most 30 cm, for example. The processing capacity may be 1.5 kg/s, i.e. 50 000 tons a year or 5 million kg/year, for example. A good location for the apparatus is after the ash separator, such as an electric separator, for instance. Granulation is integrated to be performed simultaneously with the operation of the power plant and granulation can be controlled by the power plant control personnel.

When the apparatus has been integrated to a power plant, granulation can be done by utilizing the temperature of both ash and flue gas and especially the heat content; the temperature of flue gas, for instance, is approximately 120 to 140 degrees Celsius. The temperature of the moistening water, which may be 25 to 40 degrees Celsius, also affects the situation. The free carbon dioxide of flue gas and the thermal energy contained in ash and flue gas can be utilized in a granulating process located in a power plant.

In an embodiment, the apparatus comprises not only the moistening fluid input MOIN, but also an input CAIN for lime milk or other lime-containing liquids. Wood ash contains more CaO than peat ash, so if the ash-producing fuel is mainly peat, it is beneficial to use additional lime for the formation of strong granules or pellets.

The core part of the apparatus shown in the figure is the processing unit R, such as pipe granulator R. In addition, as external structural parts (not shown), there is a burnt lime silo and a lime feed conveyor to a lime milk mixing vessel, where burnt lime is mixed with water. From the mixing vessel, lime milk is pumped with a chemical pump to the input CAIN in the forward end of the pipe granulator R. In addition, there is also a conveyor for conveying the finished granules to a product storage or the floor of a storage space or a bagging device.

This method is a method for granulating fly ash. Fly ash containing one or more alkali earth oxides (e.g. CaO) is moistened with a moistening liquid, which results in calcium hydroxide Ca(OH)₂ being formed in the moistening liquid, and the calcium hydroxide is reacted with carbon dioxide CO₂ absorbed from flue gas to the moistening liquid, whereby solid calcium carbonate is formed that stabilizes the ash granules produced by layered granulation.

In the processing unit R, i.e. mixing reactor R, the surfaces of ash particles are first moistened with water by mixing. The water then reacts with the surface of the ash and forms calcium hydroxide Ca(OH)₂ dissolved in the water film on the surfaces of the ash particles.

To improve the strength of the produced granules, it is possible to use a calcium hydroxide water solution (lime milk) to moisten the ash particles. When the ash particles come into contact with flue gas in the mixing reactor R, the carbon dioxide contained in the flue gas quickly reacts under mixing with calcium hydroxide and forms a solid, i.e. precipitated, calcium carbonate as the particles collide and form granules. This reaction is accelerated not only by mixing but also by a high content of flue gas. The carbon dioxide content of flue gas is approximately 700fold in comparison with the content in the atmosphere. This way, not only liquid bridges but also solid-matter bridges are formed between the ash particles. Due to the movement caused by the mixing conveyance device SCR, the granules advance in the mixing reactor R, i.e. processing unit R, against a warm flue gas flow and dry and attain their final strength. The reactor R has flue gas atmosphere with the exception of the moistening phase.

Crystalline calcium carbonate fills up the intermediate spaces of the ash particles in the finished granules and covers part of the granule surfaces, owing to which the granules maintain their structure well in dry conditions.

Thus, the reactions are as follows:

CaO + H₂O => Ca(OH)₂

Ca(OH)₂ + CO₂ => CaCO₃ + H₂O

In an embodiment, one or more earth alkali oxides contained in fly ash are forming earth alkali hydroxide into the moistening water by an ionization reaction.

In an embodiment, flue gas is fed against the material flow direction of fly ash and ash granules. In addition, the flue gas used as source for the carbon dioxide to be absorbed to the moistening liquid also dries the ash granules. The flue gas utilized in the method is the flue gas from a power plant combustion process, and the ash separated from this combustion process is then granulated in the method.

In addition to the fly ash alkali earth oxide that reacts with water, lime milk or some other lime-containing liquid is used as the source for calcium hydroxide in the method. Lime milk or some other lime-containing liquid is supplied in the moistening phase. Lime milk or some other lime-containing liquid is supplied in the moistening phase in addition to the moistening fluid (water).

Inside the liquid bridges of the granules, calcium carbonate (CaCO₃) precipitates in the water and on the granule surfaces limited by the bridge after the burnt lime (CaO) in the ash has first reacted with water to produce calcium hydroxide Ca(OH)₂ and then with the carbon dioxide dissolved in the water. The precipitation of calcium carbonate first takes place quickly, while there is dissolved carbon dioxide in the water. After this, the precipitation slows down and its rate is determined by the dissolution rate of carbon dioxide from the surrounding air into the water. According to the findings of the applicant, the strengthening of the wet pellets stored in room temperature continues slowly over several hours, as long as the granules, or agglomerates, contain water and calcium hydroxide dissolved therein. The slowness is due to the low carbon dioxide content of air and the slow transfer of carbon dioxide molecules through the boundary layer of the liquid phase, or the slow diffusion of the carbon dioxide molecules. According to the findings of the applicant, if calcium hydroxide-containing water is surrounded by flue gas or pure carbon dioxide gas and the mixture is mixed, the precipitation of calcium carbonate takes place very quickly, in less than a second. In a mixing situation according to the present invention, the reaction takes place quickly, whereby the dwell time of the material in the reaction zone, i.e. granulating zone PZ, of the granulator need not be long.

The amount of reactive lime in fly ash needs to be taken into account when determining the total amount of water coming with the moistening water and lime milk. This is necessary because water is consumed bound in reactive lime, and water is also required for the excess water needed to initiate the layered pelleting or layered granulating and to produce the formation of meniscus bridges in the agglomerates or granules being generated.

As for the amount of lime milk to be added, the amount of lime milk depends on the quality of ash in such a manner that the above-mentioned binding compounds can be generated sufficiently to form stable granules that withstand processing.

According to the findings of the applicant, a sufficient amount of burnt lime is 2% or less in comparison with the amount of dry ash.

The granulation according to the invention is based on the formation of chemical stabilization, in other words a calcite matrix that increases hardness and compression strength, in the mixing reactor R. Utilizing chemical stabilization fully is possible, when the granulation is performed by a layered method that forms porous agglomerates. Stabilization also improves storage properties. In layered granulation, the use of water as a binding agent is based on the high surface tension of water in the wet pellets and the liquid bridges formed by water between the particles of a wet pellet.

The solubility of the produced granules can be slowed down and the strength increased by at least the following changes in process conditions:
- by increasing the amount of binding agent, such as calcium hydroxide Ca(OH)₂ (portlandite) or burnt lime (CaO)
- by increasing the reaction temperature, whereby the formation of calcite (CaCO₃) becomes faster
- by increasing the amount of carbon dioxide, whereby the formation of calcite becomes faster
- by increasing the dwell time of the granulation process:
   - by increasing the reaction time of ash and moistening water in the ash extinguishing and cooling zone of the mixing reactor
   - by lengthening the reaction time of ash, calcium hydroxide and glue gas in the reaction zone of the mixing reactor
   - by increasing the effective time of flue gas in the drying/stabilization zone of wet pellets.

After the burnt lime CaO has reacted with water to produce calcium hydroxide, a slow pozzolanic reaction may begin in the ash:

2·SiO₂ + 3·Ca(OH)₂ →Ca₃SiO₆·3H₂O

Calcium silicate hydrate, which is a typical compound increasing strength in concrete, is produced as a result of the reaction. The silica contained in the ash should, however, be in the amorphous form for the above pozzolanic reaction to be realized. Silica produces a great deal of calcium silicate hydrate that increases strength, but the initiation of the reaction may require a high pH so that the glass-like shell often covering ash granules is dissolved to enable pozzolanic reactions.

Owing to chemical stabilization, the ash becomes slow-dissolving and better suitable for environmental construction.

In summary, we wish to state the following. Granulation is done in power plant conditions in a tubular, continuous mixing reactor R by using water and carbon dioxide contained in flue gas as binding agents, which produce as a reaction product solid calcium carbonate when the ash and/or added moistening liquid contains calcium oxide CaO. The moistening water and the ash collected from the ash separator, such as electrical separator, of the power plant are fed from one end of the pipe mixing reactor. When becoming moist, the ash travels in the pipe, and the water that moistens the surfaces of the ash granule reacts with calcium oxide (CaO), for instance, and forms calcium hydroxide Ca(OH)₂. If the calcium oxide CaO content of the ash is not sufficient to form strong granules, lime milk can be fed into the mixing reactor R at this stage. At the same time, supplements, such as urea, can be added to improve the exploitability of ash. As it advances, moist ash meets the flue gas that is fed against the flow from the other end of the pipe reactor and then exits the reactor. As it advances in the pipe of the mixing reactor, i.e. processing unit, the moist ash reacts quickly with the carbon dioxide of the flue gas due to mixing and forms calcium carbonate (CaCO₃) on the surfaces of the granules and especially at the contact points between the granules, where liquid endeavours to accumulate. Also, during strong mixing, the ash particles agglomerate, i.e. form granules. At the tail end of the mixing reactor R, the granules dry under the heat of the flue gas and exit from the bottom part of the pipe reactor.

In the present invention, the object is to form agglomerates of the ash particles, the wet size of which may be approximately 5 mm, for example, and their dry size a few millimetres, for example.

In the method of the invention, calcium carbonate is precipitated in the spaces between the granules and not generally on the surfaces of the ash particles. The aim is to form binding solid-matter bridges or a solid-matter matrix of the calcium carbonate to bind the ash particles.

In the method, fine-grained solid matter is formed into granules by combining two granulation processes in a novel way: 1) by attaching particles to each other by means of mobile liquids or, in this case, water, and 2) by means of solid-matter bridges. In the granulation method, both above-mentioned granulation processes and the drying of the granules are performed in a uniform device unit or in consecutive ones.

When dry powdery material is moistened, the significance of adhesion powers is reduced when the amount of liquid is large enough. The cohesion of the material is then based on liquid bridges between the particles. Between the particles, the liquid may form separate lens-shaped liquid bridges (menisci), an almost uniform bridge network, or it may fill the intermediate spaces entirely. The strength of such agglomerates is based on the negative pressure acting between the concave liquid surfaces and on the edge force on the boundary of three phases.

To produce strong agglomerates, i.e. wet pellets, the amount of the moistening liquid needs to be correct. An agglomerate has a maximum strength in the capillary state. Too low a liquid content causes the formation of air inclusions restricting capillary action. Too much moisture, in turn, causes the formation of a liquid film extending over the entire agglomerate, which eliminates capillary forces, whereby the strength of the agglomerate is only based on the surface tension of the liquid.

In the method of the invention, it is possible to use an amount of moistening liquid that corresponds to approximately 75% of the amount corresponding to the capillary state. Thus, the amount of moistening liquid mainly corresponds to the bridge network. According to the findings of the applicant, a thus moistened material seems visually moist, but shows no shine caused by free liquid surfaces. In such a state, carbon dioxide has good contact with the spaces between the granules and carbon dioxide gas can dissolve in the liquid between the granules and, as it comes into contact with dissolved calcium 2+ ions, it can immediately precipitate in the space between the granules.

In many cases, the attachment with liquid is only an intermediate phase in the determination of the final physical properties of the granules. A change in the temperature or pressure causes phase shifts in the agglomerates: for instance, the transformation of the liquid into solid matter may increase the strength of the granule. In general, the binding mechanisms based on solid-matter bridges may be:
a) the crystallization of the dissolved agent;
b) the hardening of the binding material;
c) the melting of the particles, local fusion welding or sintering;
d) a chemical reaction.

In the drying of the agglomerates, as the capillary strength is eliminated, the binding may also, in addition to what is stated above, be based on mechanical binding, which is due to the unevenness and multiformity of the particles, as well as on the van der Waals forces between the particles.

In the method of the invention, the binding mechanism is based mainly on a chemical precipitation reaction, the resulting evaporation of liquid, and the creation of close contacts caused by mixing in the reaction and drying phases (during drying, on mechanical locking and van der Waals forces).

In the method, the ash particles are only moistened, they are not as aqueous slurry, because that would prevent granulation.

In addition to what is described above, the method has other applications, such as producing fertilizer granules based on carbonate precipitation or producing dry granular tailings from the wet tailings of a flotation plant, especially sulphide ore.

## Claims

1. A method for granulating fly ash processing unit comprising a pipe reactor, **characterised in that** fly ash containing one or more alkali earth oxides is, in addition to being mixed, moistened with a moistening liquid at flue gas atmosphere, which results in calcium hydroxide being formed in the moistening liquid on surface of ash particles , and the calcium hydroxide of liquid bridges of the ash particle formed granules is reacted with carbon dioxide absorbed from flue gas to the moistening liquid, whereby solid calcium carbonate is formed that stabilizes ash granules produced by layered granulation, wherein in the method flue gas is fed against the material flow direction (FD) of the fly ash and ash granules in the pipe reactor.

2. A method as claimed in claim 1, **characterised in that** the one or more alkali earth oxides contained in the fly ash is forming earth alkali hydroxide in the moistening water by an ionization reaction.

3. A method as claimed in claim 1 or 2, **characterised in that** the flue gas used as source for the carbon dioxide to be absorbed into the moistening liquid also dries the ash granules.

4. A method as claimed in claim 1, 2, or 3, **characterised in that** the flue gas utilized in the method is flue gas from a power plant combustion process, and the ash separated from this combustion process is then granulated in the method.

5. A method as claimed in claim 1, **characterised in that** in addition to the fly ash alkali earth oxide, lime milk or some other lime-containing liquid is used as the source for calcium hydroxide in the method.

6. A method as claimed in claim 5, **characterised in that** the lime milk or other lime-containing liquid is fed in the moistening phase.

7. A method as claimed in claim 6, **characterised in that** the lime milk or other lime-containing liquid is fed in the moistening phase in addition to the moistening liquid.

8. A method as claimed in claim 1 or 5, **characterised in that** the moistening liquid is either water or lime milk or some other lime-containing liquid.

9. An apparatus for granulating fly ash, comprising, as consecutive operating blocks in a processing unit (R), a moistening block (MZ) having a moistening liquid input (MOIN), a granulating block (PZ) subsequent to the moistening block (MZ) and a drying block (DZ) subsequent to the granulating block (PZ), and that the processing unit (R) comprises an input (SMIN) and output (SMOUT) for flue gas, which are positioned relative to each other in such a manner that the flue gas can be directed to both the drying block (DZ) and the subsequent granulating block (PZ).

10. An apparatus as claimed in claim 9, **characterised in that** the processing unit (R) has a conveyance device (SCR) for conveying fly ash and created granules in the flow direction of the processing unit (R).

11. An apparatus as claimed in claim 9 or 10, **characterised in that** the flue gas input (SMIN) and output (SMOUT) are connected against the flow direction (FD) of the material in the consecutive granulating block (PZ) and drying block (DZ).

12. An apparatus as claimed in claim 10 or 11, **characterised in that** flue gas input (SMIN) and output (SMOUT) are connected against the flow direction (FD) of the material in the conveyance device (SCR) so that the flue gas input (SMIN) is in the conveyance direction defined by the conveyance device (SCR) later than the flue gas output (SMOUT).

13. An apparatus as claimed in claim 9, **characterised in that** the apparatus comprises not only the moistening fluid input (MOIN), but also an input (CAIN) for lime milk or some other lime-containing liquid.

## Patentansprüche

1. Verfahren für eine Flugasche granulierende Verarbeitungseinheit, umfassend einen Rohrreaktor, **dadurch gekennzeichnet, dass** die Flugasche, die ein oder mehrere Erdalkali-Oxide enthält, zusätzlich dazu, dass sie gemischt wird, mit einer Befeuchtungsflüssigkeit bei Rauchgasatmosphäre befeuchtet wird, was dazu führt, dass Kalziumhydroxid in der Befeuchtungsflüssigkeit auf der Oberfläche von Aschepartikeln gebildet wird, und das Kalziumhydroxid der Flüssigkeitsbrücken des aus Aschepartikeln geformten Granulats mit Kohlendioxid reagiert, das aus dem Rauchgas in die Befeuchtungsflüssigkeit absorbiert wird, wodurch festes Calciumcarbonat entsteht, welches das durch geschichtete Granulation gebildete Aschegranulat stabilisiert, wobei in dem Verfahren Rauchgas gegen die Materialströmungsrichtung (SD) der Flugasche und des Aschegranulats in dem Rohrreaktor eingeleitet wird.

2. Verfahren nach Anspruch 1, **dadurch gekennzeichnet, dass** die einen oder mehreren Erdalkali-Oxide, die in der Flugasche enthalten sind, Erdalkali-Hydroxide in dem Befeuchtungswasser durch eine lonisationsreaktion bilden.

3. Verfahren nach Anspruch 1 oder 2, **dadurch gekennzeichnet, dass** das Rauchgas, das als Quelle für das Kohlendioxid verwendet wird, welches in die Befeuchtungsflüssigkeit absorbiert werden soll, das Aschengranulat außerdem trocknet.

4. Verfahren nach Anspruch 1, 2 oder 3, **dadurch gekennzeichnet, dass** das in dem Verfahren verwendete Rauchgas ein Rauchgas aus einem Kraftwerksanlagen-Verbrennungsprozess ist und die aus diesem Verbrennungsprozess separierte Asche anschließend in dem Verfahren granuliert wird.

5. Verfahren nach Anspruch 1, **dadurch gekennzeichnet, dass** zusätzlich zu dem Flugasche-Erdalkali-Oxid, Kalkmilch oder eine andere kalkhaltige Flüssigkeit als die Quelle für das Kalziumhydroxid in dem Verfahren verwendet wird.

6. Verfahren nach Anspruch 5, **dadurch gekennzeichnet, dass** die Kalkmilch oder andere kalkhaltige Flüssigkeit in der Befeuchtungsphase eingeleitet wird.

7. Verfahren nach Anspruch 6, **dadurch gekennzeichnet, dass** die Kalkmilch oder andere kalkhaltige Flüssigkeit in der Befeuchtungsphase zusätzlich zu der Befeuchtungsflüssigkeit eingeleitet wird.

8. Verfahren nach Anspruch 1 oder 5, **dadurch gekennzeichnet, dass** die Befeuchtungsflüssigkeit entweder Wasser oder Kalkmilch oder eine andere kalkhaltige Flüssigkeit ist.

9. Vorrichtung zum Granulieren von Flugasche, umfassend, als konsekutive Betriebsblöcke in einer Verarbeitungseinheit (R), einen Befeuchtungsblock (MZ) mit einem Befeuchtungsflüssigkeitseingang (MOIN), einem Granulierungsblock (PZ) nach dem Befeuchtungsblock (MZ) und einen Trocknungsblock (DZ) nach dem Granulierungsblock (PZ), und dass die Verarbeitungseinheit (R) einen Eingang (SMIN) und einen Ausgang (SMOUT) für Rauchgas umfasst, die relativ zueinander auf solche Weise positioniert sind, dass das Rauchgas sowohl zu dem Trocknungsblock (DZ) als auch dem anschließenden Granulierungsblock (PZ) geleitet werden kann.

10. Vorrichtung nach Anspruch 9, **dadurch gekennzeichnet, dass** die Verarbeitungseinheit (R) eine Beförderungsvorrichtung (SCR) zum Befördern von Flugasche und erzeugtem Granulat in der Förderrichtung der Verarbeitungseinheit (R) aufweist.

11. Vorrichtung nach Anspruch 9 oder 10, **dadurch gekennzeichnet, dass** der Rauchgaseingang (SMIN) und -ausgang (SMOUT) gegen die Förderrichtung (SD) des Materials in dem konsekutiven Granulierungsblock (PZ) und Trocknungsblock (DZ) verbunden sind.

12. Vorrichtung nach Anspruch 10 oder 11, **dadurch gekennzeichnet, dass** der Rauchgaseingang (SMIN) und -ausgang (SMOUT) gegen die Förderrichtung (FD) des Materials in der Beförderungsvorrichtung (SCR) verbunden sind, so dass sich der Rauchgaseingang (SMIN) in der Förderrichtung, die durch die Fördervorrichtung (SCR) definiert wird, später als der Rauchgasausgang (SMOUT) befindet.

13. Vorrichtung nach Anspruch 9, **dadurch gekennzeichnet, dass** die Vorrichtung nicht nur den Befeuchtungsflüssigkeitseingang (MOIN), sondern auch einen Eingang (CAIN) für Kalkmilch oder eine andere kalkhaltige Flüssigkeit umfasst.

## Revendications

1. Procédé de granulation d'une unité de traitement de cendres volantes comprenant un réacteur tubulaire, **caractérisé en ce que** des cendres volantes contenant un ou plusieurs oxydes alcalino-terreux sont, en plus d'être mélangées, humidifiées avec un liquide d'humidification dans une atmosphère de gaz de fumée, le résultat étant que de l'hydroxyde de calcium est formé dans le liquide d'humidification à la surface des particules de cendres, et l'hydroxyde de calcium de ponts liquides des granules formés de particules de cendres est mis à réagir avec le dioxyde de carbone absorbé à partir des gaz de fumée dans le liquide d'humidification, de sorte que du carbonate de calcium solide est formé, qui stabilise les granules de cendres produits par une granulation à stratification, dans lequel, dans le procédé, les gaz de fumée sont alimentés, à l'encontre de la direction d'écoulement de matériau (FD) des cendres volantes et des granules de cendres, dans le réacteur tubulaire.

2. Procédé selon la revendication 1, **caractérisé en ce que** les un ou plusieurs oxydes alcalino-terreux contenus dans les cendres volantes forment un hydroxyde alcalino-terreux dans l'eau d'humidification par l'intermédiaire d'une réaction d'ionisation.

3. Procédé selon la revendication 1 ou 2, **caractérisé en ce que** les gaz de fumée utilisé comme source de dioxyde de carbone à absorber dans le liquide d'humidification sèche également les granules de cendre.

4. Procédé selon la revendication 1, 2 ou 3, **caractérisé en ce que** les gaz de fumée utilisés dans le procédé sont des gaz de fumée provenant d'un processus de combustion de centrale électrique, et les cendres séparées de ce processus de combustion sont ensuite granulées dans le procédé.

5. Procédé selon la revendication 1, **caractérisé en ce qu'**en plus de l'oxyde alcalino-terreux des cendres volantes, du lait de chaux ou un certain autre liquide contenant de la chaux est utilisé comme source d'hydroxyde de calcium dans le procédé.

6. Procédé selon la revendication 5, **caractérisé en ce que** le lait de chaux ou un autre liquide contenant de la chaux est introduit dans la phase d'humidification.

7. Procédé selon la revendication 6, **caractérisé en ce que** le lait de chaux ou un autre liquide contenant de la chaux est introduit dans la phase d'humidification en plus du liquide d'humidification.

8. Procédé selon la revendication 1 ou 5, **caractérisé en ce que** le liquide d'humidification est de l'eau ou du lait de chaux ou un autre liquide contenant de la chaux.

9. Appareil de granulation de cendres volantes, comprenant, en tant que blocs de fonctionnement consécutifs dans une unité de traitement (R), un bloc d'humidification (MZ) comportant une entrée de liquide d'humidification (MOIN), un bloc de granulation (PZ) à la suite du bloc d'humidification (MZ) et un bloc de séchage (DZ) à la suite du bloc de granulation (PZ), et en ce que l'unité de traitement (R) comprend une entrée (SMIN) et une sortie (SMOUT) pour les fumées, qui sont positionnées l'une par rapport à l'autre d'une manière telle que les gaz de fumée peuvent être dirigés vers le bloc de séchage (DZ) et le bloc de granulation ultérieur (PZ).

10. Appareil selon la revendication 9, **caractérisé en ce que** l'unité de traitement (R) comporte un dispositif de transport (SCR) pour transporter des cendres volantes et des granules créés dans la direction d'écoulement de l'unité de traitement (R).

11. Appareil selon la revendication 9 ou 10, **caractérisé en ce que** l'entrée (SMIN) et la sortie (SMOUT) de gaz de fumée sont connectées à l'encontre de la direction d'écoulement (FD) du matériau dans le bloc de granulation consécutif (PZ) et le bloc de séchage. (DZ).

12. Appareil selon la revendication 10 ou 11, **caractérisé en ce que** l'entrée (SMIN) et la sortie (SMOUT) de gaz de fumée sont connectées à l'encontre de la direction d'écoulement (FD) du matériau dans le dispositif de transport (SCR) de sorte que l'entrée de gaz de fumée (SMIN) se trouve dans la direction de transport définie par le dispositif de transport (SCR) plus tard que la sortie de gaz de fumée (SMOUT).

13. Appareil selon la revendication 9, **caractérisé en ce que** l'appareil comprend non seulement l'entrée de fluide d'humidification (MOIN), mais également une entrée (CAIN) pour le lait de chaux ou un autre liquide contenant de la chaux.
